# EUROPEAN PATENT SPECIFICATION

(11) **EP 3 091 308 B1**
(45) Date of publication and mention of the grant of the patent: **11.12.2019**
(21) Application number: 16170106.5
(22) Date of filing: 21.03.2012
(51) Int. Cl.: F24T 10/13

(54) **PIPE MEMBER EQUIPPED WITH HEAT INSULATION CORE PIPELINE AND U-SHAPED ANNULARLY-DISTRIBUTED PIPELINE**
LEITUNGSELEMENT MIT WÄRMEISOLIERUNGSKERNLEITUNG UND U-FÖRMIGE RINGFÖRMIG VERTEILTE LEITUNG
ÉLÉMENT DE CONDUITE ÉQUIPÉE D'UN NOYAU D'ISOLATION THERMIQUE ET PIPELINE À DISTRIBUTION ANNULAIRE EN FORME DE U

(30) Priority: 22.03.2011 US 201113053398
(43) Date of publication of application: 09.11.2016
(62) Divisional of application: 12160644.6
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- JP-A- 2007 315 742
- JP-A- 2009 092 350

## Description

### BACKGROUND OF THE INVENTION

### (a) Field of the Invention

The present invention relates to a pipe member equipped with heat insulation core pipeline and U-shaped annularly-distributed pipeline for being installed within the thermal storage body (500) composed of natural thermal storage body, such as shallow surface of the earth, or pool, lake, river, ocean, or artificial objects in solid, or gaseous, or liquid state; wherein the pipe member equipped with heat insulation core pipeline and U-shaped annularly-distributed pipeline is constructed through that the piping segments of fluid inlet terminal and/or outlet terminal of the U-type core piping and loop piping are directly made of thermal insulating material, or thermal insulating structure is installed between the inlet terminal and the outlet terminal; so as to prevent thermal energy loss because of thermal conduction between adjacent piping segments of inlet terminal and outlet terminal on the same side when thermal conductive fluid with temperature difference passing through.

### (b) Description of the Prior Art

Traditionally, thermal energy loss often occurs in U-type piping device of U-type piping heat exchanger, because of thermal conduction by temperature difference between adjacent piping segments of fluid inlet terminal and fluid outlet terminal installed on the same side when fluid with temperature difference passing through.

JP 2009 092350, which can be considered as the closest prior art, discloses in figures 1 and 4 a thermal conductive cylindrical body corresponding to the columnar thermal body of the application for being installed underground having a multiple-route spiral piping structure with two or more routes installed within the thermal conductive cylindrical body, having a central piping segment concentrated adjacent the axial axis of the thermal conductive cylindrical body, the central piping segment being made of thermal insulated material.

### SUMMARY OF THE INVENTION

The present invention relates to a pipe member for use in a thermal storage body comprising the features of claim 1.

### BRIEF DESCRIPTION OF THE DRAWINGS

FIG. 1 shows an embodiment of conventional U-type piping (100) installed within the thermal storage body (500);
FIG. 2 shows an embodiment of conventional U-type piping (100) installed within the columnar thermal conductive body (300), wherein the columnar thermal conductive body (300) is placed within the thermal storage body (500);
FIG. 3 is a schematic structural view showing that the U-type spiral piping structure (800) having two or more than two routes is installed in the columnar thermal conductive body (300), and spirally arranged at the periphery of the columnar thermal conductive body (300), and the periphery of individual central piping segments (700) of U-type spiral piping of the multiple routes arranged at the center is installed with the thermal insulating device (400), according the present invention.
FIG. 4 is a section view of FIG. 3.

### DESCRIPTION OF MAIN COMPONENT SYMBOLS

100 : U-type piping
101 : First fluid inlet and outlet terminal
102 : Second fluid inlet and outlet terminal
111 : Thermal conductive fluid
200 : Common piping
300 : Columnar thermal conductive body
400 : Thermal insulating device
500 : Thermal storage body
700 : Central piping segment of U-type spiral piping
800 : U-type spiral piping structure
900 : Piping segment of the second fluid inlet and outlet terminal (102) of the U-type spiral piping structure (800)
1101 : Shared first fluid inlet and outlet terminal

### DETAILED DESCRIPTION OF THE PREFERED EMBODIMENTS

The present invention relates to a pipe member equipped with heat insulation core pipeline and U-shaped annularly-distributed pipeline for being installed within the thermal storage body (500) composed of natural thermal storage body, such as shallow surface of the earth, or pool, lake, river, ocean, or artificial objects in solid, or gaseous, or liquid state; wherein the pipe member equipped with heat insulation core pipeline and U-shaped annularly-distributed pipeline is constructed through that the piping segments of fluid inlet terminal and/or outlet terminal of the U-type core piping and loop piping are directly made of thermal insulating material, or thermal insulating structure is installed between the inlet terminal and the outlet terminal; so as to prevent thermal energy loss because of thermal conduction between adjacent piping segments of inlet terminal and outlet terminal on the same side when thermal conductive fluid with temperature difference passing through.

As for the pipe member equipped with heat insulation core pipeline and U-shaped annularly-distributed pipeline of the present invention, each of the U-type piping (100) is used for passing through one or more following thermal conductive fluid (111), including for passing through:
1) liquid state fluid;
2) gaseous state fluid;
3) liquid to gaseous state fluid; and
4) gaseous to liquid state fluid.

Traditionally, thermal energy loss often occurs in U-type piping device of U-type piping heat exchanger, because of thermal conduction by temperature difference between adjacent piping segments of fluid inlet terminal and fluid outlet terminal installed on the same side when fluid with temperature difference passing through, which is illustrated by examples as followings:

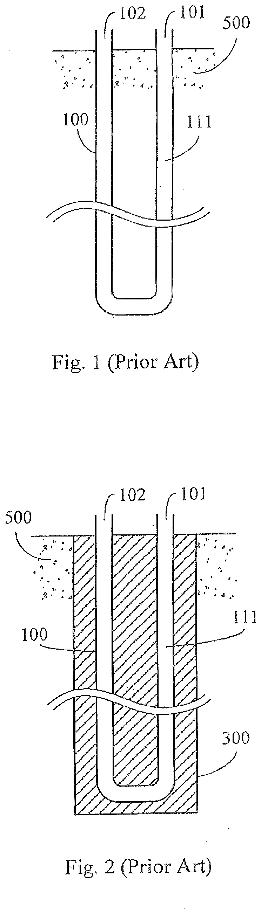

FIG. 1 shows an example of conventional U-type piping (100) installed within the thermal storage body (500); when the thermal conductive fluid (111) passing through the piping segment of the first fluid inlet and outlet terminal (101) and the adjacent piping segment of the second fluid inlet and outlet terminal (102) respectively installed on the same side of the U-type piping (100) are in temperature difference, the two piping segments will produce thermal conduction and therefore result in thermal energy loss.

FIG. 2 shows an example of conventional U-type piping (100) installed within the columnar thermal conductive body (300), wherein the columnar thermal conductive body (300) is placed within the thermal storage body (500).

When the columnar thermal conductive body (300) is installed at the pipe member equipped with heat insulation core pipeline and U-shaped annularly-distributed pipeline of the thermal storage body (500) composed of natural thermal storage body, such as shallow surface of the earth, or pool, lake, river, ocean, etc, or artificial objects in solid, or gaseous, or liquid state, and the thermal conductive fluid (111) with temperature difference passes through the first fluid inlet and outlet terminal (101) and the second fluid inlet and outlet terminal (102) of the U-type piping, there will be thermal energy loss, because of thermal conduction between adjacent piping segments of the first fluid inlet and outlet terminal (101) and the second fluid inlet and outlet terminal (102) installed on the same side;

The present invention relates to a pipe member equipped with heat insulation core pipeline and U-shaped annularly-distributed pipeline for being installed within the thermal storage body (500) composed of natural thermal storage body, such as shallow surface of the earth, or pool, lake, river, ocean, etc, or artificial objects in solid, or gaseous, or liquid state; wherein the pipe member equipped with heat insulation core pipeline and U-shaped annularly-distributed pipeline is constructed through that the piping segments of the U-type fluid piping inlet terminal and/or outlet terminal, which are radial U-type pipelines for passing thermal energy through each other, are directly made of thermal insulating material, or thermal insulating structure is installed between the inlet terminal and the outlet terminal; so as to prevent thermal energy loss because of thermal conduction between adjacent piping segments of inlet terminal and outlet terminal on the same side when thermal conductive fluid with temperature difference passing through.

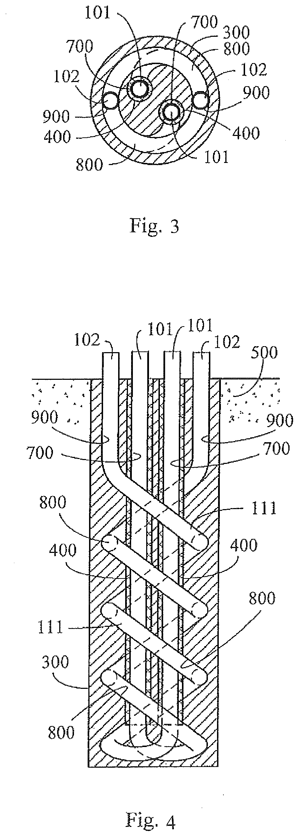

FIG. 3 is a schematic structural view showing that the multiple-route U-type spiral piping structure (800) having two or more than two routes is installed within the columnar thermal conductive body (300), and spirally installed at the periphery of the columnar thermal conductive body (300), and the bottom is concentrated toward the center and connected to the first fluid inlet and outlet terminal (101) through the central piping segment (700) of U-type spiral piping, and the outer periphery of the central piping segment (700) of U-type spiral piping of the multiple routes concentrated at the center is installed with the thermal insulating device (400).

FIG. 4 is a section view of FIG. 3
As shown in FIG. 3 and FIG. 4, it mainly consists of:
--Multiple-route U-type spiral piping: constituted by a U-type spiral piping structure (800) having two or more than two routes and allowing the thermal conductive fluid (111) to pass through, or by multiple sets of the U-type spiral piping structures (800) installed in the columnar thermal conductive body (300) composed of solid state or colloidal object; the U-type spiral piping structure (800) in multiple-route is spirally and annularly installed near the peripheral edge of the columnar thermal conductive body (300), wherein the first fluid inlet and outlet terminal (101) of the U-type spiral piping structure (800) of each route is installed at the top of the spiral piping structure center, and is communicated with the bottom of the U-type spiral piping structure (800) of each route through the central piping segment (700) of U-type spiral piping of each route, and the second inlet and outlet terminal (102) of each route is installed at the top end of the U-type spiral piping structure (800) spirally up its own run via the piping segment (900) of the second fluid inlet and outlet terminal (102) of the U-type spiral piping structure (800) of each route;
--Thermal insulating device (400): related to a thermal insulating structure constituted by the followings with thermal insulating effects, such as solid, flexible body, or foam, or enveloped colloid, gas, or liquid, or vacuum structure; the U-type spiral piping structure (800) having two or more than two routes is installed in the columnar thermal conductive body (300), and the central piping segments (700) of U-type spiral piping of the multiple routes are concentrated in the columnar thermal conductive body (300) for upwardly connecting to the first fluid inlet and outlet terminal (101); the central piping segment (700) of U-type spiral piping is directly made of the thermal insulating material or sleeved with the thermal insulating material, or the periphery of the concentrated central piping segments (700) of U-type spiral piping of the multiple routes is installed with the thermal insulating structure (400), by way of the mentioned thermal insulating structure (400), the thermal energy loss caused by thermal conduction between the concentrated central piping segments (700) of U-type spiral piping of the multiple routes, and the U-type spiral piping structure (800) of each route, and the piping segment (900) of the second fluid inlet and outlet terminal (102) of the U-type spiral piping structure (800) of each route is substantially reduced;
   The structure includes one or more than one of the following structural states:
   1) Piping structure assembly: which is provided with the multiple-route U-type spiral piping composed of the U-type spiral piping structure (800) having two or more than two routes and the piping segment (900) of the second fluid inlet and outlet terminal (102) of the U-type spiral piping structure (800), and the central piping segment (700) of U-type spiral piping of each route is concentrated adjacent installed at the axial center, and the thermal insulating device (400) is installed at the periphery of the individual central piping segment (700) of U-type spiral piping, or the individual central piping segment (700) of U-type spiral piping of each route is directly made of thermal insulating material, so as to configure the piping structure assembly;
   2) Columnar structure enveloped by the columnar thermal conductive body (300): which is provided with the columnar thermal conductive body (300) made of the thermal conductive material in various geometric cross section shapes such as round, oval, square, rectangular, or star-like shapes, for being served to envelope the U-type spiral piping structure (800) having two more or than two routes and the piping segment (900) of the second fluid inlet and outlet terminal (102) of the U-type spiral piping structure (800), and to envelope the thermal insulating device (400) installed at the periphery of individual central piping segment (700) of U-type spiral piping of the multiple routes concentrated adjacent installed at the axial center is respectively installed with the thermal insulating device (400), or the individual central piping segment (700) of U-type spiral piping is directly made of the thermal insulating material, so as to configure the columnar structure enveloped by the columnar thermal conductive body (300) (as shown in FIG. 3, which is a schematic structural view showing that the U-type spiral piping structure (800) having two or more than two routes is installed in the columnar thermal conductive body (300), and spirally arranged at the periphery of the columnar thermal conductive body (300), and the periphery of individual central piping segment (700) of U-type spiral piping of the multiple routes arranged at the center is installed with the thermal insulating device (400), according the present invention; and FIG. 4 is a section view of FIG. 3);
   3) Columnar structure utilizing the columnar thermal conductive body (300) having piping therein as the structure member: which is directly made of the columnar thermal conductive body (300), and configured in the structural state having piping therein for being installed with the multiple-route spiral piping composed of the U-type spiral piping structure (800) having two or more than two routes, including the piping segment (900) of the second fluid inlet and outlet terminal (102) of the U-type spiral piping structure (800), the central piping segments (700) of U-type spiral piping of each route which connects to the first fluid inlet and outlet terminal (101) being concentrated adjacent installed at the axial center, and the thermal insulating device (400) installed at the periphery of the central piping segment (700) of U-type spiral piping, so as to configure the columnar structure utilizing the columnar thermal conductive body (300) having piping therein as the structure member.

## Claims

1. A pipe member for use in a thermal storage body (500) comprising:
multiple-route U-type spiral piping: constituted by a U-type spiral piping structure (800) having two or more than two routes; wherein the first fluid inlet and outlet terminal (101) of the U-type spiral piping structure (800) of each route is installed at the top of the spiral piping structure center, and is connected with the bottom of the U-type spiral piping structure (800) of each route through the central piping segment (700) of U-type spiral piping of each route, and the second inlet and outlet terminal (102) of each route is installed at the top end of the U-type spiral piping structure (800) spirally via the piping segment (900) of the second fluid inlet and outlet terminal (102) of the U-type spiral piping structure (800) of each route;
a thermal insulating device (400): the individual central piping segments (700) of U-type spiral piping of the multiple routes are concentrated adjacent to the axial center and the periphery of the central piping segments (700) of U-type spiral piping of the multiple routes are respectively installed with a thermal insulating device (400), by way of the mentioned thermal insulating device (400), the thermal energy loss caused by thermal conduction between the concentrated central piping segments (700) of U-type spiral piping of the multiple routes, and the U-type spiral piping structure (800) of each route, and the piping segment (900) of the second fluid inlet and outlet terminal (102) of the U-type spiral piping structure (800) of each route is substantially reduced; and
a columnar thermal conductive body (300) which is composed of solid state or colloidal object; wherein the multiple-route U-type spiral piping is spirally and annularly installed near the peripheral edge of the columnar thermal conductive body (300), and wherein the multiple-route U-type spiral piping allows a thermal conductive fluid (111) to pass through the columnar thermal conductive body (300).

## Patentansprüche

1. Leitungselement zur Verwendung in einem Wärmespeicherkörper (500), umfassend:
U-förmige spiralförmige Rohrleitung mit mehreren Leitungen,
bestehend aus einer U-förmigen spiralförmigen Rohrleitungsstruktur (800) mit zwei oder mehr als zwei Leitungen;
wobei der erste Fluideinlass- und -auslassanschluss (101) der U-förmigen spiralförmigen Rohrleitungsstruktur (800) jeder Leitung oben auf dem Mittelpunkt der spiralförmigen Rohrleitungsstruktur installiert ist und mit dem Boden der U-förmigen spiralförmigen Rohrleitungsstruktur (800) jeder Leitung durch das zentrale Rohrleitungssegment (700) der U-förmigen spiralförmigen Rohrleitung jeder Leitung verbunden ist, und wobei der zweite Einlass- und -auslassanschluss (102) jeder Leitung spiralförmig am oberen Ende der U-förmigen spiralförmigen Rohrleitungsstruktur (800) durch das Rohrleitungssegment (900) des zweiten Fluideinlass- und -auslassanschlusses (102) der U-förmigen spiralförmigen Rohrleitungsstruktur (800) jeder Leitung installiert ist;
eine Wärmeisolierungsvorrichtung (400):
wobei die einzelnen zentralen Rohrleitungssegmente (700) der U-förmigen spiralförmigen Rohrleitung der mehreren Leitungen neben der axialen Mitte konzentriert sind und der Umfang der zentralen Rohrleitungssegmente (700) der U-förmigen spiralförmigen Rohrleitung der mehreren Leitungen über die erwähnte Wärmeisolierungsvorrichtung (400) entsprechend mit einer Wärmeisolierungsvorrichtung (400) installiert ist, wobei der Wärmeenergieverlust, der durch Wärmeleitung zwischen den konzentrierten zentralen Rohrleitungssegmenten (700) der U-förmigen spiralförmigen Rohrleitung der mehreren Leitungen und der U-förmigen spiralförmigen Rohrleitungsstruktur (800) jeder Leitung und dem Rohrleitungssegment (900) des zweiten Fluideinlass- und -auslassanschlusses (102) der U-förmigen spiralförmigen Rohrleitungsstruktur (800) jeder Leitung beträchtlich verringert wird; und
einen säulenförmigen wärmeleitfähigen Körper (300), der aus einem festen oder kolloidalen Objekt besteht;
wobei die U-förmige spiralförmige Rohrleitung mit mehreren Leitungen spiralförmig und ringförmig in der Nähe des Umfangsrands des säulenförmigen wärmeleitfähigen Körpers (300) installiert ist und wobei es die U-förmige spiralförmige Rohrleitung mit mehreren Leitungen einem wärmeleitfähigen Fluid (111) gestattet, den säulenförmigen wärmeleitfähigen Körper (300) zu durchströmen.

## Revendications

1. Élément de tuyauterie utilisé dans un corps de stockage thermique (500), comprenant :
une tuyauterie en spirale en U à voies multiples :
constituée d'une structure de tuyauterie en spirale en U (800) comportant au moins deux voies ;
le premier terminal d'entrée et de sortie du fluide (101) de la structure de tuyauterie en spirale en U (800) de chaque voie étant installé au sommet du centre de structure de tuyauterie en spirale, et étant raccordé au fond de la structure de tuyauterie en spirale en U (800) de chaque voie à travers le segment de tuyauterie centrale (700) de tuyauterie en spirale en U de chaque voie, et le second terminal d'entrée et de sortie (102) de chaque voie étant installé à l'extrémité supérieure de la structure de tuyauterie en spirale en U (800) en spirale par le segment de tuyauterie (900) du second terminal d'entrée et de sortie du fluide (102) de la structure de tuyauterie en spirale en U (800) de chaque voie ;
un dispositif d'isolation thermique (400) :
les segments de tuyauterie centrale individuels (700) de la tuyauterie en spirale en U des voies multiples concentrés de manière adjacente au centre axial et la périphérie des segments de tuyauterie centrale (700) de la tuyauterie en spirale en U des voies multiples étant respectivement installés avec un dispositif d'isolation thermique (400), par l'intermédiaire du dispositif d'isolation thermique susmentionné (400), la perte d'énergie thermique causée par la conduction thermique entre les segments de tuyauterie centrale concentrés (700) de la tuyauterie en spirale en U des voies multiples, la structure de tuyauterie en spirale en U (800) de chaque voie et le segment de tuyauterie (900) du second terminal d'entrée et de sortie de fluide (102) de la structure de tuyauterie en spirale en U (800) de chaque voie étant sensiblement réduite ; et
un corps thermoconducteur en colonne (300) qui est composé d'un objet à l'état solide ou colloïdal ;
la tuyauterie en spirale en U à voies multiples étant installée en spirale et en anneau près du bord périphérique du corps thermoconducteur en colonne (300), et la tuyauterie en spirale en U à voies multiples laissant passer un fluide thermoconducteur (111) à travers le corps thermoconducteur en colonne (300).
